# DEMANDE DE BREVET EUROPEEN

(11) **EP 1 501 320 A1**
(43) Date de publication de la demande: **26.01.2005**
(21) Numéro de dépôt: 03291836.9
(22) Date de dépôt: 24.07.2003
(51) Int. Cl.: H04Q 7/22

(54) **Procédé et système de soumission d'un message déposé dans une boîte de réception d'un service de messagerie**

(71) Demandeur: FRANCE TELECOM, 75015 Paris (FR)
(72) Inventeur: Brun, Arnaud, 92100 Boulogne Billancourt (FR); Potier, Aline, 92160 Antony (FR); Tonneau, Cléry, 92190 Meudon (FR)
(74) Mandataire: Fréchède, Michel

(57) **Abrégé**

Ce procédé de soumission à un terminal de télécommunication (3) appartenant à un utilisateur destinataire, d'un message déposé (MSG) dans une boîte de réception (4) hébergée sur un serveur de messagerie (1) par un utilisateur expéditeur, par l'intermédiaire d'un réseau de télécommunication (2) consiste au moins à :
- transmettre ce message (MSG) de la boîte de réception (4) de l'utilisateur destinataire vers un serveur de messagerie multimédia (MMSC),
- transmettre du serveur de messagerie multimédia (MMSC) vers le terminal (3) dudit utilisateur destinataire, un message multimédia (MMS) contenant au moins ledit message déposé, ce qui permet audit utilisateur destinataire de disposer directement du message déposé sur son terminal de communication.

## Description

La présente invention concerne un système de soumission à un terminal de télécommunication d'un message déposé dans une boîte de réception d'un service de messagerie et un procédé de soumission associé à ce système.

Dans le domaine des télécommunications, les services de messagerie sont très répandus.

En particulier, le service de messagerie multimédia (MMS) permet d'envoyer et de recevoir des messages multimédias de grandes tailles contenant du texte, des images, du son ou de la vidéo.

Le service de messagerie multimédia est assuré par un serveur de messagerie multimédia qui permet l'envoi et la réception de messages multimédias depuis tous dispositifs comportant un moyen de communication avec ce serveur de messagerie multimédia et un moyen de composition et de lecture des messages multimédias, usuellement appelé module client MMS. Ce service peut être déployé sur un réseau mobile, par exemple GSM, GPRS ou UMTS, ou sur un réseau fixe filaire ou non.

Par ailleurs, la plupart des opérateurs mobiles ou fixes proposent à leurs abonnés un service de messagerie vocale. Lorsqu'un utilisateur disposant de ce service n'est pas joignable par exemple si son terminal est éteint ou hors couverture réseau, si sa ligne est occupée ou renvoyée de manière inconditionnelle sur une messagerie vocale ou si l'utilisateur refuse de prendre l'appel, le correspondant appelant a la possibilité d'enregistrer un message vocal dans une boîte de réception vocale de l'abonné. Ensuite, ce service de messagerie notifie à l'utilisateur l'existence d'un nouveau message dans sa boîte vocale.

La notification de la réception d'un nouveau message peut se présenter sous différentes formes, notamment sous forme textuelle ou vocale.

Lorsque la notification est textuelle, elle peut se faire par envoi d'un message SMS, ou d'un message électronique e-mail. Les messages SMS sont reçus sur le mobile ou le poste fixe de l'utilisateur. Les messages envoyés par e-mail peuvent être consultés depuis un ordinateur ou un assistant numérique personnel (PDA) via un site internet, ou encore depuis un terminal mobile utilisé en mode WAP.

L'existence d'un nouveau message dans une boîte de réception peut être également notifiée par appel téléphonique ou par envoi d'un message vers un poste fixe. Dans ce dernier cas, le poste fixe émet une tonalité spécifique ou donne une information visuelle pour indiquer l'existence d'un message vocal dans la boîte de réception vocale.

Quel que soit le mode de notification utilisé, les messages déposés peuvent être consultés soit, directement depuis le téléphone abonné à la boîte vocale ou, soit indirectement depuis un téléphone quelconque.

Cependant, aucun mode de notification existant ne permet d'inclure le message vocal directement dans une notification à destination du terminal du destinataire. En effet, les différents moyens de notification existants permettent uniquement la notification de l'existence d'un message et non l'écoute ou la lecture du message.

En conséquence, après avoir reçu le message de notification indiquant l'existence d'un nouveau message dans sa boîte vocale, l'utilisateur abonné doit ensuite appeler sa messagerie vocale pour pouvoir écouter son message. Cette démarche n'est pas conviviale, elle est consommatrice de temps et nécessite la connaissance du numéro de la messagerie. Elle est, de plus, facturée par certains opérateurs.

Par ailleurs, les modes de consultation existants ne permettent pas à l'utilisateur de stocker le message vocal en local dans son terminal de télécommunication et donc de pouvoir écouter celui-ci de manière différée ou transférer celui-ci vers un autre utilisateur.

La présente invention a pour but de permettre à tout utilisateur disposant d'un terminal comportant un client MMS de recevoir directement sur son terminal un message déposé dans sa messagerie.

Pour cela, la présente invention propose un procédé de soumission à un terminal de télécommunication d'un message déposé dans une boîte de réception d'un serveur de messagerie qui comprend les étapes suivantes :
- transmission du message déposé dans la boîte de réception de l'utilisateur destinataire vers un serveur de messagerie multimédia,
- transmission d'un message multimédia contenant au moins le message déposé du serveur de messagerie multimédia vers le terminal de l'utilisateur destinataire.

Grâce à ce procédé, l'abonné dispose directement sur son terminal de télécommunication du message vocal ou visuel déposé dans sa messagerie.

Cette invention simplifie les démarches de l'utilisateur pour accéder à ses messages et augmente la convivialité des services de messagerie classiques.

Suivant des modes particuliers de réalisation, le procédé de soumission d'un message comporte l'une ou plusieurs des caractéristiques suivantes :
- le serveur de messagerie est un serveur de messagerie vocale, le message déposé comprenant des données vocales ;
- le message déposé comprend des données de type image ;
- le message déposé comprend des données textuelles ;
- le procédé comprend en outre une étape d'établissement d'informations relatives au message déposé et/ou d'informations relatives à la boîte de réception par une unité de traitement du serveur de messagerie ;
- le procédé comprend en outre une étape d'introduction des informations dans le message déposé par l'unité de traitement du serveur de messagerie ;
- le procédé comprend une étape d'introduction dans le message déposé d'une donnée de type image stockée dans une mémoire du serveur de messagerie par une unité de traitement du serveur de messagerie ;
- le procédé comporte également une étape d'enregistrement du message déposé dans la boîte de réception du serveur de la messagerie lorsque le terminal de télécommunication de l'utilisateur destinataire n'est pas joignable ;
- le procédé comporte également une étape d'enregistrement du message multimédia dans une mémoire du serveur de la messagerie multimédia ;
- le procédé comporte également une étape d'enregistrement du message multimédia dans une mémoire du terminal de télécommunication de l'utilisateur destinataire ;
- la transmission du message déposé au serveur de messagerie multimédia comporte en outre les étapes intermédiaires suivantes :
   - transmission du message déposé du serveur de messagerie vers un serveur passerelle pour convertir le protocole de communication du message déposé en un protocole lisible par le serveur de message multimédia, par exemple en un protocole de type,
   - transmission du message converti du serveur passerelle vers le serveur de messagerie multimédia .

La présente invention propose également un système de soumission d'un message déposé dans une boîte de réception d'un serveur de messagerie comprenant au moins :
- au niveau du serveur de messagerie, une interface de communication vers un serveur de messagerie multimédia permettant d'assurer la transmission de ce message déposé vers le serveur de messagerie multimédia et,
- au niveau du terminal de télécommunication de l'utilisateur destinataire, une interface de communication avec le serveur de messagerie multimédia pour recevoir le message multimédia contenant le message déposé et un moyen de lecture de messages multimédias permettant de restituer directement le message déposé sur le terminal de télécommunication.

Suivant des modes particuliers de réalisation, le système de soumission d'un message comporte l'une ou plusieurs des caractéristiques suivantes :
- le terminal de télécommunication de l'utilisateur destinataire comporte également une mémoire apte à stocker des messages multimédias ;
- le réseau de télécommunication est un réseau de téléphones mobiles et/ou un réseau de postes fixes ;
- l'interface de communication du serveur de messagerie est une interface de type XML et le système comporte un serveur passerelle pour convertir le protocole de communication en un protocole lisible par le serveur de message multimédia.

L'invention sera mieux comprise à la lecture de la description qui va suivre, donnée à titre d'exemple non limitatif et, en référence à l'unique figure annexée sur laquelle un système de soumission de messages au terminal de télécommunication d'un utilisateur destinataire a été représenté.

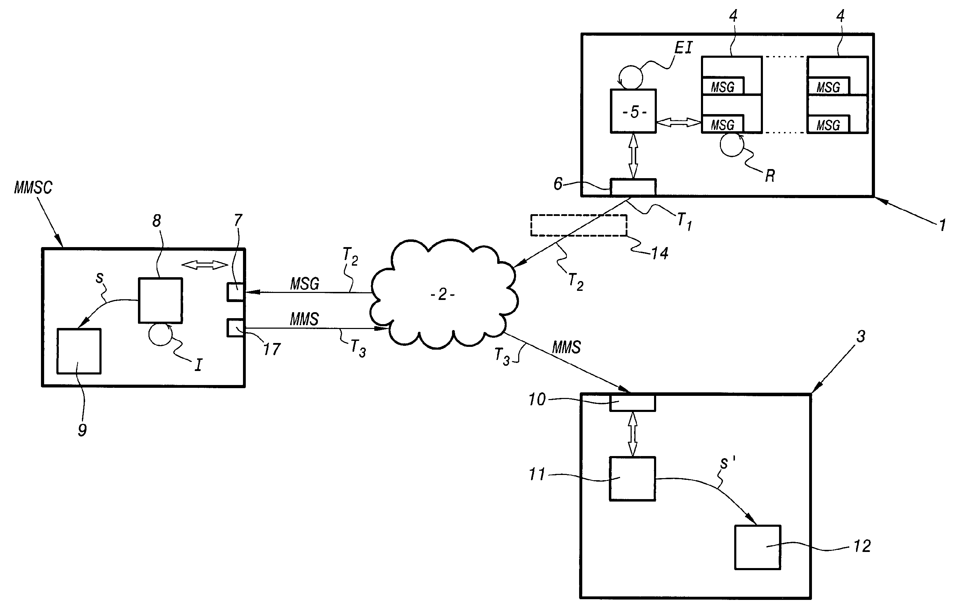

Le système de soumission de messages, représenté sur la figure 1, comprend un serveur de messagerie 1 relié à un réseau de communication 2 de manière à pouvoir communiquer avec un serveur de messagerie multimédia MMSC et avec un terminal de télécommunication 3 d'un utilisateur abonné au serveur de messagerie 1.

Le système de soumission de messages selon cette invention va être décrit ci-dessous en application sur un serveur de messagerie vocale. Cependant, il pourrait également être appliqué à un serveur de messagerie textuel ou image. Dans ce cas, les messages pourraient être constitués par exemple par une carte météo ou un article de journal.

Le serveur de messagerie vocal 1, illustré en figure 1, comprend un ensemble de boîtes de réception de messages 4, une unité de traitement 5 apte à gérer les messages enregistrés (MSG) dans les boîtes de réception 4 et une interface de communication 6 avec un serveur de messagerie multimédia MMSC.

Chaque boîte de réception 4 est dédiée à un utilisateur abonné particulier et est identifiée par un moyen d'identification tel que par exemple le numéro de téléphone de l'utilisateur abonné.

L'unité de traitement 5 de la messagerie 1 est apte à gérer les messages vocaux enregistrés (MSG) dans les boîtes de réception 4.

En particulier, l'unité de traitement est apte à traiter deux fonctions appelées respectivement « illustration » et « renseignement ». Ces fonctions peuvent être activées ou désactivées sur commande de l'opérateur de la messagerie vocale ou de l'utilisateur abonné par exemple par envoi d'un message MMS ou SMS.

Lorsque la fonction « illustration » est activée et que l'utilisateur reçoit un message vocal, l'unité de traitement 5 du serveur de messagerie vocale est apte à ajouter une donnée image au message vocal réceptionné. Cette donnée image est stockée dans une mémoire non représentée du serveur de messagerie vocale. Avantageusement, cette donnée image est constituée par exemple du logo de l'opérateur, d'une image publicitaire ou d'une photo.

Lorsque la fonction dite de « renseignement » est activée, l'unité de traitement 5 du serveur de messagerie 1 analyse le message reçu et établit des informations textuelles relatives à ce message et/ou aux autres messages stockés dans la boîte de réception. Ces informations textuelles peuvent, par exemple, comprendre le numéro de téléphone du déposant, la date et l'heure à laquelle le message a été reçu, la taille du message reçu, le nombre de messages stockés dans la boîte de réception ou le pourcentage de mémoire non alloué dans celle-ci.

Lorsque les fonctions « illustration » et « renseignement » sont activées, l'unité de traitement 5 du serveur de messagerie vocale 1 est apte à introduire le message vocal, les données textuelles et la donnée image dans un unique message.

De plus, l'unité de traitement 5 est apte à envoyer un message contenant le message vocal au terminal de communication 3 de l'utilisateur abonné via un serveur de messagerie multimédia MMSC.

Ainsi, lorsque les fonctions « illustration » et « renseignement » sont activées, la donnée image et les informations textuelles sont envoyées au serveur de messagerie multimédia MMSC en même temps que le message vocal.

En conséquence, selon l'invention, le serveur de messagerie 1 est apte à envoyer les messages déposés dans une boîte de réception 4 d'un utilisateur abonné ainsi que la donnée image et les données textuelles associées à ce message vocal à un serveur de messagerie multimédia MMSC.

L'interface de communication 6 du serveur de messagerie vocale lui permet de dialoguer avec le serveur multimédia MMSC. Différents types d'interfaces peuvent être utilisés.

Ainsi, un premier type d'interfaçage consiste à utiliser un service de notification par e-mail déjà disponible sur certaines messageries vocales fixes ou mobiles. Dans ce cas, un message électronique e-mail est directement envoyé vers une interface 7 du serveur multimédia MMSC. Cet e-mail contient en pièce attachée le message vocal du correspondant ainsi qu'éventuellement une donnée image et une donnée textuelle comportant des informations relatives au message ou à la boîte de réception. Ce service de notification par e-mail est apte à dialoguer avec une interface du type MM3 de la messagerie multimédia MMSC. L'interface MM3 est généralement utilisée entre un serveur de messagerie multimédia et des systèmes de messageries externes. Elle n'est pas normalisée mais des exemples d'implémentation utilisant le protocole SMTP sont indiqués dans les normes décrites dans le document MMS 3GPP TS 23.140 : « Annexe A : Exemples d'implémentations d'architectures MMS ».

De même, un second type d'interfaçage consiste à utiliser une librairie XML, elle aussi, déjà disponible sur certaines messageries vocales. Comme les librairies XML communiquent selon un langage HTML et un protocole HTTP, le message MSG est tout d'abord envoyé vers une passerelle intermédiaire 14 pour le convertir en protocole SMTP, de sorte qu'il soit lisible par l'interface de type MM3 de la messagerie multimédia. Puis, le message est envoyé T2 vers le serveur de messagerie multimédia MMSC. La richesse fonctionnelle de la librairie XML permet d'enrichir le service rendu notamment en offrant une possibilité de gestion des messages, par exemple, par suppression d'un message vocal directement après son transfert vers le serveur multimédia MMSC.

Un troisième type consiste à utiliser l'interface de type MM7 de la messagerie multimédia. Cette interface MM7 est classiquement utilisée entre un serveur de messagerie multimédia MMS et des fournisseurs de services à valeur ajoutée. Elle est normalisée et basée sur le protocole SOAP.

Classiquement, le serveur multimédia MMSC comprend, une interface de communication 7 vers le serveur de messagerie vocale 1, une interface de communication 17 vers le terminal de l'utilisateur, une unité de traitement 8 des messages, et un moyen de stockage de données 9.

L'interface de communication 7 vers la messagerie vocale 1 peut être constituée par une interface de type MM3 utilisant le protocole SMTP ou une interface MM7 utilisant un protocole SOAP.

L'interface de communication 17 est une interface de type MM1 adaptée à communiquer avec un module client MMS 11 d'un terminal de communication.

L'unité de traitement 8 est capable de recevoir des messages multimédias et de les traiter de manière à ce que ceux-ci puissent être lus par tout terminal comportant un module client MMS.

Les moyens de stockage de données ou mémoire 9 sont aptes à stocker temporairement les messages vocaux et le cas échéant des données images et textuelles jusqu'à leur réception par le terminal de télécommunication 3 de l'utilisateur abonné.

Selon l'invention, le serveur de messagerie multimédia MMSC est apte à envoyer un message multimédia MMS contenant un message vocal MSG ainsi qu'une donnée image et des données textuelles lorsque ces fonctionnalités sont activées, vers le terminal de télécommunication 3 de l'utilisateur abonné.

Avantageusement, le terminal de télécommunication 3 de l'utilisateur abonné comprend une interface de communication 10 avec la messagerie multimédia MMS, un module client MMS 11 et un moyen de stockage de données 12. Préférentiellement, l'interface de communication 10 du terminal de télécommunication est de type interface MM1.

Le module client MMS 11 est d'une part un moyen de communication avec une messagerie multimédia et d'autre part un moyen de composition, de lecture et de présentation de messages multimédias MMS.

Le client MMS 11 du terminal de communication 3 est apte à gérer les messages multimédias MMS. Ainsi, l'utilisateur peut choisir de les conserver dans le terminal, de les réécouter, de les effacer ou même de les transférer vers un autre utilisateur.

Les interfaces de communication 6, 7, 10 et 17, les unités de traitement 5 et 8 ainsi que le module client MMS 11 peuvent être implémentés en handware sur un microcontrôleur ou en software sur un support logiciel ou un composant programmé exécuté par un microprocesseur à partir d'une mémoire non volatile.

Le moyen de stockage de donnée 12 est constitué par une mémoire non volatile de type ROM (Read Only Memory), EEPROM (Electrically Erasable Programmable Read Only Memory) ou équivalent. Il a une capacité qui peut être typiquement de l'ordre de 500 koctets, ou plus, et permet de stocker les messages multimédias.

Les différentes étapes du procédé de soumission d'un message déposé dans une boîte de réception à un terminal destinataire vont, à présent être décrites.

Lorsqu'un abonné destinataire n'est pas joignable, un message MSG peut être enregistré dans une boîte de réception 4 appartenant à l'utilisateur abonné pendant une étape R.

Lorsqu'un message vocal a été enregistré, une unité de traitement 5 de la messagerie vocale 1 envoie, pendant une étape T1, T2, le message déposé MSG au serveur multimédia MMSC, via les interfaces de communication 6, 7 et le réseau 2.

Si la fonction « renseignement » est activée sur la messagerie vocale, l'unité de traitement 5 de ce terminal analyse le message vocal déposé, et établit des données textuelles contenant des informations sur le message et éventuellement sur les messages déjà stockés dans la boîte de réception 4 de l'utilisateur destinataire.

Au cours d'une étape El, l'unité de traitement 5 ajoute au message vocal des données textuelles qu'il a établies.

Si la fonction « illustration » est activée sur la messagerie vocale, l'unité de traitement 5 inclut, pendant l'étape El, une illustration dans le message envoyé de sorte que le message envoyé au serveur de messagerie multimédia MMSC comprend une donnée image et des données vocales.

Si les fonctions « renseignement » et « illustration » ont été activées, l'unité de traitement 5 envoie pendant l'étape T1, T2, un message contenant des données vocales, textuelles et images au serveur multimédia MMSC, via les interfaces de communication 6, 7 et le réseau 2.

Ensuite, selon une étape I l'unité de traitement 8 du serveur de messagerie multimédia MMSC traite le message envoyé par le serveur de messagerie vocale 1.

Le message envoyé par le serveur de messagerie vocale est stocké temporairement, au cours d'une étape S, dans une mémoire 9 du serveur de messagerie multimédia MMSC.

Selon une étape T3 du procédé de soumission de messages, le message multimédia MMS est envoyé au terminal de télécommunication 3 du destinataire. Dès que le message multimédia a été réceptionné avec succès par le terminal de télécommunication 3, le serveur de messagerie multimédia MMSC le supprime de sa mémoire.

Ainsi, cette invention permet au destinataire utilisateur de recevoir directement sur son terminal de télécommunication 3 le message vocal MSG que le correspondant a déposé dans la boîte de réception de sa messagerie vocale et lorsque les fonctions « renseignement » et « illustration » sont activées de recevoir également des données textuelles et images.

Par ailleurs, il est préférable que le serveur de messagerie vocale 1 n'envoie pas comme usuellement une autre notification de présence d'un message sur sa boîte de réception 4, afin d'éviter que l'utilisateur ne soit notifié deux fois de la réception d'un même message vocal.

Dans un mode de réalisation préféré de l'invention, l'utilisateur abonné peut activer ou désactiver sur le serveur de messagerie vocale l'envoi de ses nouveaux messages vocaux par envoi de messages multimédias ou SMS. L'accès à la gestion d'activation/de désactivation peut se faire :
- par appel vocal depuis la ligne propriétaire de la boîte vocale,
- par envoi d'un SMS ou d'un MMS depuis la ligne propriétaire de la boîte vocale,
- par un accès WEB ou WAP permettant à l'utilisateur de modifier ses options de notification,
- en utilisant deux codes USSD dédiés à l'activation/désactivation de cette notification.

Avantageusement, le message vocal MSG, enregistré pendant l'étape R dans la boîte de réception 4 de l'utilisateur destinataire, peut être conservé sur le serveur de messagerie 1 après son transfert vers le centre serveur de messagerie multimédia MMSC. Dans ce cas, la consultation du message sur le serveur de messagerie vocale 1 peut donc toujours être offerte. Ainsi, si le terminal de télécommunication 3 est non joignable, l'utilisateur abonné peut tout de même consulter le message déposé MSG dans sa boîte de réception.

Avantageusement, lorsque le terminal de communication de l'utilisateur reçoit le message multimédia, le module client MMS 11 peut l'enregistrer dans la mémoire 12 du terminal de communication de l'utilisateur pendant une étape S'.

Avantageusement, ce service de soumission de messages par messagerie multimédia pourra être offert par un opérateur à tous ses abonnés disposant d'un terminal comportant un module client MMS.

Avantageusement, cette invention peut être appliquée à un réseau de téléphones fixes ou à un réseau de téléphones mobiles.

## Revendications

1. Procédé de soumission à un terminal de télécommunication (3) appartenant à un utilisateur destinataire, d'un message déposé (MSG) dans une boîte de réception (4) d'un serveur de messagerie (1) par un utilisateur expéditeur, par l'intermédiaire d'un réseau de télécommunication (2), **caractérisé en ce qu'**il comprend les étapes suivantes :
- transmission (T1, T2) du message déposé (MSG) dans la boîte de réception (4) de l'utilisateur destinataire du serveur de messagerie (1) vers un serveur de messagerie multimédia (MMSC),
- transmission (T3) du serveur de messagerie multimédia (MMSC) vers le terminal (3) dudit utilisateur destinataire, d'un message multimédia (MMS) contenant au moins ledit message déposé (MSG), ce qui permet audit utilisateur destinataire de disposer directement du message déposé, en local sur son terminal de communication (3).

2. Procédé de soumission d'un message selon la revendication 1, **caractérisé en ce que** ledit serveur de messagerie (1) est un serveur de messagerie vocale, ledit message déposé (MSG) comprenant des données vocales.

3. Procédé de soumission d'un message selon la revendication 1 ou 2, **caractérisé en ce que** le message déposé (MSG) comprend des données de type image.

4. Procédé de soumission d'un message selon l'une quelconque des revendications 2 ou 3, **caractérisé en ce qu'**il comprend également des données textuelles.

5. Procédé de soumission d'un message selon l'une des revendications précédentes, **caractérisé en ce qu'**il comprend en outre une étape d'établissement d'informations relatives au message déposé (MSG) et/ou d'informations relatives à la boîte de réception (4) par une unité de traitement (5) du serveur de messagerie (1).

6. Procédé de soumission d'un message selon la revendication 5, **caractérisé en ce qu'**il comprend en outre une étape d'introduction (El) desdites informations dans le message déposé (MSG) par l'unité de traitement (5) du serveur de messagerie (1).

7. Procédé de soumission d'un message selon l'une quelconque des revendications 2, 4, 5 ou 6 **caractérisé en ce qu'**il comprend une étape d'introduction (El) dans le message déposé (MSG) d'une donnée de type image stockée dans une mémoire du serveur de messagerie (1) par une unité de traitement (5) du serveur de messagerie (1).

8. Procédé de soumission d'un message selon l'une quelconque des revendications précédentes, **caractérisé en ce qu'**il comporte également une étape (R) d'enregistrement du message déposé (MSG) dans la boîte de réception (4) du serveur de la messagerie (1) lorsque le terminal de télécommunication (3) de l'utilisateur destinataire n'est pas joignable.

9. Procédé de soumission d'un message selon l'une quelconque des revendications 1 à 8, **caractérisé en ce qu'**il comporte également une étape (S) d'enregistrement du message multimédia (MMS) dans une mémoire (9) du serveur de la messagerie multimédia (MMSC).

10. Procédé de soumission d'un message selon l'une quelconque des revendications précédentes, **caractérisé en ce qu'**il comporte également une étape (S') d'enregistrement du message multimédia (MMS) dans une mémoire (12) du terminal de télécommunication (3) de l'utilisateur destinataire.

11. Procédé de soumission d'un message selon l'une quelconque des revendications précédentes, **caractérisé en ce que** la transmission du message déposé (MSG) au serveur de messagerie multimédia (MMSC) comporte en outre les étapes intermédiaires suivantes :
- transmission (T1) du message déposé (MSG) du serveur de messagerie (1) vers un serveur passerelle (14) pour convertir le protocole de communication du message déposé en un protocole lisible par le serveur de message multimédia (MMSC), par exemple en un protocole de type SMTP,
- transmission (T2) du message converti du serveur passerelle (14) vers le serveur de messagerie multimédia (MMSC).

12. Système de soumission d'un message déposé dans une boîte de réception (4) d'un service de messagerie (1) d'un utilisateur destinataire équipé d'un terminal de télécommunication (3) par un utilisateur expéditeur, par l'intermédiaire d'un réseau de télécommunication (2), **caractérisé en ce qu'**il comprend au moins :
- au niveau dudit serveur de messagerie (1),
- une interface de communication (6) vers un serveur de messagerie multimédia (MMSC) permettant d'assurer la transmission de ce message déposé (MSG) vers ledit serveur de messagerie multimédia (MMSC) et,
- au niveau du terminal de télécommunication (3) de l'utilisateur destinataire,
- une interface de communication (10) avec ledit serveur de messagerie multimédia (MMSC) pour recevoir ledit message multimédia (MMS) contenant ledit message déposé (MSG),
- un module client multimédia (11) de messages multimédias (MMS) permettant de restituer directement ledit message déposé (MSG) sur ledit terminal de télécommunication (3).

13. Système de soumission d'un message selon la revendication 12, **caractérisé en ce que** le terminal de télécommunication (3) de l'utilisateur destinataire comporte également une mémoire (12) apte à stocker des messages multimédias (MMS).

14. Système de soumission d'un message selon l'une quelconque des revendications 12 ou 13, **caractérisé en ce que** le réseau de télécommunication (2) est un réseau de téléphones mobiles et/ou un réseau de postes fixes.

15. Système de soumission d'un message selon l'une quelconque des revendications 12 à 14 **caractérisé en ce que** l'interface de communication du serveur de messagerie (1) est une interface de type XML et **en ce que** le système comporte un serveur passerelle (14) pour convertir le protocole de communication en un protocole lisible par le serveur de message multimédia (MMSC).
